# EUROPÄISCHE PATENTSCHRIFT

(11) **EP 1 104 794 B1**
(45) Veröffentlichungstag und Bekanntmachung des Hinweises auf die Patenterteilung: **01.10.2003**
(21) Anmeldenummer: 00125855.7
(22) Anmeldetag: 25.11.2000
(51) Int. Cl.: C08J 5/12, C09J 5/02

(54) **Transparente Beschichtung von thermoplastischen Sensoroberflächen**
Transparent coating of sensor surfaces
Revêtement transparent des surfaces de capteurs

(30) Priorität: 02.12.1999 DE 19957970
(43) Veröffentlichungstag der Anmeldung: 06.06.2001
(73) Patentinhaber: Hella KG Hueck & Co., 59552 Lippstadt (DE)
(72) Erfinder: Rohrberg, Simone, 59558 Lippstadt (DE); Temme, Ulrich, Dr., 59555 Lippstadt (DE)

(56) Entgegenhaltungen:
- EP-A- 0 856 445
- DE-A- 4 101 995
- US-A- 5 533 391

## Beschreibung

Gegenstand der Erfindung ist eine transparente Beschichtung von thermoplastischen Sensoroberflächen zur Verklebung mit Mineralglasoberflächen mittels eines doppelseitigen transparenten Klebebandes sowie ein Verfahren zur Beschichtung der genannten Sensoroberflächen mit der genannten Beschichtung.

Es ist im Stand der Technik vorgeschlagen worden, Regen/Lichtsensoren mit Mineralglasoberfläche an der Innenseite von Kraftfahrzeugscheiben mittels einen doppelseitigen transparenten Klebebandes anzubringen. Von der Firma 3M werden hierzu Hochleistungsverbindungssysteme (VHB™/VHB™⁺-Klebebänder) angeboten, die für hohe, statische, dynamische, thermische und chemische Anforderungen konzipiert sind. Diese zeichnen sich durch ein wesentliches höheres Leistungsvermögen gegenüber herkömmlichen Klebebändern aus. Prinzipiell sind diese Produkte geeignet zum Verbinden gleichartiger oder unterschiedlicher Werkstoffe, wie beispielsweise Metalle, NE-Metalle, Holz, Glas, hochenergetische Kunststoffe (ABS, Polycarbonat, Acrylglas [PMMA], PVC und andere). Auch niederenergetische Kunststoffe, wie Polyethylen und Polypropylen können verbunden werden.

Bei der Verklebung von thermoplastischen Sensoroberflächen mit Mineralglasoberflächen treten jedoch im Verlauf der Anwendung der Klebeverbindung gelegentlich gasdesorptionsbedingte Blasen zwischen dem Polycarbonat und dem Klebeband auf.

Zur Überwindung der vorgenannten Nachteile wird erfindungsgemäß eine transparente Beschichtung von thermoplastischen Sensoroberffächen zur Verklebung mit Mineralglasoberflächen mittels eines doppelseitigen transparenten Klebebandes vorgeschlagen umfassend eines oder mehrere Polymere ausgewählt aus der Gruppe bestehend aus mit Melaminharzen vernetzbaren Acrylharzen, mit Melaminharzen vemetzbaren Alkydharzen, mit Isocyanaten vernetzbare Hydroxylgruppen-haltige Polyester, Polyether, Acrylate, strahlungsvernetzbaren Acrylatharzen, strahlungsvernetzbaren Methacrylatharzen, strahlungsvernetzbaren Urethanacrylaten und/oder strahlungsvernetzbaren Polyesteracrylaten.

Um die gasdesorptionsbedingte Blasenbildung zwischen der thermoplastischen Sensoroberfläche und dem doppelseitigen Klebeband zu verhindern, wird die Sensoroberfläche zunächst mit einer guthaftenden Beschichtung, insbesondere einem Lack beschichtet, der eine Pufferung des Gashaushaltes durch Diffusionssperrwirkung oder Speicherwirkung bedingt. Diese Beschichtung besitzt zusätzlich die notwendige Eigenschaft der Haftungsverbesserung zum Klebeband im Vergleich zur reinen thermoplastischen Sensoroberfläche.

Die Fixierung eines Regensensors an der Innenseite eines Kraftfahrzeuges mittels eines doppelseitigen Klebebandes ist aus der DE 41 01 995 A1 bekannt, wobei auf die Problematik von Luftblaseneinschlüssen im Zusammenhang mit der Verwendung von doppelseitigen Klebebändern hingewiesen wird. Zur Lösung dieses Problems wird in der DE 41 01 995 A1 allerdings vorgeschlagen, auf das doppelseitige Klebeband zu verzichten und stattdessen zwischen der Sensoroberfläche und der Scheibe einen mit einem flüssigen Klebstoff gefüllten, bei Druckbeaufschlagung zerplatzenden Hohlkörper einzufügen. Dabei ist der Hohlkörper in einer Vertiefung des Sensors eingelegt und ragt teilweise aus der Sensoroberfläche heraus. Beim Anpressen der Sensoroberfläche an die Scheibe platzt der Hohlkörper, so daß der Klebstoff freigesetzt wird und sich zwischen Sensoroberfläche und Scheibe gleichmäßig verteilen soll. Das Vorsehen einer Vertiefung in der Sensoroberfläche sowie das Einlegen des Hohlkörpers in diese ist jedoch aufwendig und nachteilig.

Aus der US 5,533,391 ist ein Sensor mit einer thermoplastischen Sensoroberfläche bekannt, der allerdings auf einer einer Fensterscheibe zugeordneten Abdeckung und nicht auf der Scheibe selbst fixiert ist Ober die Art und Weise der Fixierung kann der Fachmann der US 5,533,391 keinen Hinweis entnehmen.

Nach Aufbringen und Aushärtung der Beschichtung im Ofen bei erhöhter Temperatur und/oder Bestrahlung insbesondere mit UV-Licht ist sichergestellt, dass es in kritischen Temperaturlagerungstests, zu keiner Blasenbildung zwischen der thermoplastischen Sensoroberfläche und dem Klebeband mehr kommt.

In umfangreichen Testversuchen wurde beispielsweise gefunden, dass Polysiloxanlacke nicht geeignet sind für die erfindungsgemäße transparente Beschichtung, da diese zu einer Haftungsverschlechterung gegenüber dem reinen thermoplastischen Substrat führen.

Besonders bevorzugt im Sinne der vorliegenden Erfindung wird die transparente Beschichtung auf einer Oberfläche von Polycarbonat aufgebracht. Polycarbonat besitzt bekanntermaßen eine hohe Transparenz, neigt jedoch bei hohen Temperaturen dazu, Gase zu desorbieren, die sich in einer störenden Blasenbildung bemerkbar machen.

Die vorgenannten Polymere der Beschichtung sind besonders gut geeignet, eine feste Verbindung zum doppelseitigen Klebeband zur Verfügung zu stellen, die auch in Warmlagerungstests keine Nachteile aufweist.

Besonders bevorzugt im Sinne der vorliegenden Erfindung werden als doppelseitige Klebebänder Strahlen-vernetzte Acrylatprodukte, beispielsweise der Firma 3M eingesetzt, die unter der Bezeichnung VHB™/VHB™⁺-Klebebänder im Handel erhältlich sind.

Die Schichtdicke der erfindungsgemäßen Beschichtung hat selbstverständlich einen gewissen Einfluss auf die Schälfestigkeit des erfindungsgemäßen Systems. Wird die Schichtdicke zu gering gewählt, so ist eine ausreichende Sperrwirkung durch die Gasdesorption nicht zu erreichen.

Eine zu große Schichtdicke verringert die Schälfestigkeit und ist aus ökonomischen Gründen nicht zu empfehlen. Dementsprechend ist es im Sinne der vorliegenden Erfindung besonders bevorzugt, wenn die Beschichtung beispielsweise eine Schichtdicke von 5 bis 50 µm, insbesondere eine Schichtdicke von 10 bis 35 µm aufweist.

Eine weitere Ausführungsform der vorliegenden Erfindung besteht in einem Verfahren zur Beschichtung von thermoplastischen Sensoroberflächen zur Verklebung mit Mineralglasoberflächen mittels eines doppelseitigen transparenten Klebebandes mit einer transparenten Beschichtung umfassend eines oder mehrere Polymere, ausgewählt aus der Gruppe bestehend aus mit Melaminharzen vernetzbaren Acrylharzen, mit Isocyanaten vernetzbare Hydroxylgruppen-haltige Polyester, Polyether, Acrylate, strahlungsvernetzbaren Acrylatharzen, strahlungsvernetzbaren Methacrylatharzen, strahlungsvernetzbaren Urethanacrylaten und/oder strahlungsvernetzbaren Polyesteracrylaten, wobei man die Lackbeschichtung auf die Sensoroberfläche aufträgt und anschließend aushärtet.

Beispiele für Hydroxylgruppen-enthaltende Bindemittel/Harze umfassen unter anderem Polyester wie Desmophen® 650 der Fa Bayer. Die Vernetzung erfolgt mit Isocyanaten, beispielsweise dem aromatischen Desmodur® L der Fa Bayer, bevorzugt mit dem aliphatischen Desmodur® N. Der Vernetzungsgrad liegt vorzugsweise im Bereich von 1 zu 0,5 bis 1 zu 1.5, insbesondere im Bereich von 1 zu 0,9 bis 1 zu 1,1.

Beispiele für Hydroxylgruppen-enthaltende Bindemittel/Harze umfassen weiterhin Polyether wie Desmophen® 900 U der Fa Bayer. Die Vernetzung erfolgt mit Isocyanaten, beispielsweise dem aromatischen Desmodur® L der Fa Bayer, bevorzugter mit dem aliphatischen Desmodur® N.

Der Vernetzungsgrad liegt vorzugsweise im Bereich von 1 zu 0,5 bis 1 zu 1.5, insbesondere im Bereich von 1 zu 0,9 bis 1 zu 1,1.

Beispiele für Hydroxylgruppen-enthaltende Bindemittel/Harze umfassen unter anderem Acrylate wie Desmophen® A 265 der Fa Bayer. Die Vernetzung erfolgt mit Isocyanaten, beispielsweise dem aromatischen Desmodur® L der Fa Bayer; bevorzugter mit dem aliphatischen Desmodur® N. Der Vernetzungsgrad liegt vorzugsweise im Bereich von 1 zu 0,5 bis 1 zu 1.5, insbesondere im Bereich von 1 zu 0,9 bis 1 zu 1,1.

Beispiele für Hydroxylgruppen-enthaltene Bindemittel/Harze umfassen unter anderem Alkydharze wie Alftalat®AC371 der Fa. Hoechst. Die Vernetzung erfolgt mittels Melaminharzen, beispielsweise dem Maprenal®MF580 der Fa. Hoechst. Das Mischungsverhältnis liegt vorzugsweise im Bereich 8 : 2 bis 6 : 4, insbesondere im Bereich von 7 : 3; jeweils bezogen auf das Festharz.

Beispiele für Hydroxylgruppen-enthaltene Bindemittel/Harze, umfassen unter anderem Acrylatharze der Fa. Hoechst. Die Vernetzung erfolgt mittels Melaminharzen, beispielsweise dem Maprenal®MF580 der Fa. Hoechst. Das Mischungsverhältnis liegt vorzugsweise im Bereich 8 : 2 bis 6 : 4, insbesondere im Bereich von 7 : 3; jeweils bezogen auf das Festharz.

Beispiele für UV-härtbare Lacke umfassen unter anderem radikalisch vernetzende Urethanacrylate wie Ebecryl® 5129 der Fa UCB, radikalisch vernetzende Polyesteracrylate wie Ebecryl® 830 der Fa UCB oder radikalisch vernetzende Reinacrylate wie Ebecryl® 745 der Fa UCB.

Die Aushärtung der Beschichtung vor dem Inkontaktbringen mit dem Klebeband ist von besonderer Bedeutung für die Lösung der vorgenannten Aufgabe. Erfindungsgemäß kann die Aushärtung thermisch und/oder photochemisch durchgeführt werden. Besonders bevorzugt ist es im Sinne der vorliegenden Erfindung die Aushärtung der thermisch vernetzenden Systeme bei einer Temperatur im Bereich von 100 bis 150 °C, insbesondere im Bereich von 120 bis 130 °C durchzuführen. Die Aushärtung kann vorzugsweise im Verlauf von 10 bis 60 min, insbesondere im Verlauf von 20 bis 40 min durchgeführt werden.

Die Vernetzung der strahlungshärtbaren Lacke erfolgt beispielsweise durch Hg-UV-Strahler. Hierbei ist es von untergeordneter Bedeutung, ob die UV-Strahlung über Elektroden (beispielsweise der Fa IST) oder Mikrowellen (beispielsweise der Fa Fusion) induziert wird. Die Strahlungsleistung sollte vorzugsweise zwischen 60 und 240 W/cm, insbesondere zwischen 80 und 150 W/cm liegen.

Die Strahlungsintensität sollte vorzugsweise im Bereich von 100 mW/cm² und 2000 mW/cm², insbesondere im Bereich von 300 und 800 mW/cm² liegen. Diese Strahlungsintensitäten sind jeweils bezogen auf den Wellenlängenbereich von 320 bis 390 nm, gemessen mit dem UVIMAP von EIT.

Die Vorschubgeschwindigkeiten liegen vorzugsweise im Bereich von 0,1 bis 10 m/min, insbesondere im Bereich von 1 bis 2 m/min.

Bei den vorgenannten Bedingungen ist sichergestellt, dass es in kritischen Temperaturlagerungstests bei 120°C im Verlauf von 30 min oder bei 90 °C im Verlauf von 24 Stunden zu keiner Blasenbildung zwischen einer thermoplastischen Sensoroberfläche, insbesondere aus Polycarbonat und dem Klebeband mehr kommt.

Das vorgenannte System aus thermoplastischer Sensoroberfläche, Lackbeschichtung und Klebeband kann vorzugsweise dazu verwendet werden, auf der Innenseite einer Mineralglasscheibe von Kraftfahrzeugen die Sensoroberfläche mittels eines doppelseitigen transparenten Klebebandes anzubringen.

### Ausführungsbeispiel:

Um die gasdesorptions-bedingte Blasenbildung einer Sensoroberfläche aus Makrolon® AI 2447 (Polycarbonat) und einem transparentem, strahlenvernetzenden, doppelseitigen Acrylat-Klebeband der Fa 3M der eingangs genannten Art zu verhindern, wurde das Polycarbonat zunächst mit einer Beschichtung aus einem Polyester (Desmophen® und einem aliphatischen Isocyanat (Desmodur® bei einem Vernetzungsgrad von 1,0 in einer Dicke von etwa 20 µm beschichtet. Anschließend wird die Beschichtung der Polycarbonatoberfläche in einem Ofen bei einer Temperatur im Bereich von 125 bis 130 °C ausgehärtet. Das Klebeband wurde per Hand luftblasenfrei auf die beschichtete Polycarbonatoberfläche ohne weitere Hilfsmittel appliziert.

Es konnte nach dem Verkleben mit dem Klebeband auch im Temperaturlagertest bei 130 °C im Verlauf von 30 min oder bei 90 °C im Verlauf von 24 h keine Blasenbildung zwischen dem Polycarbonat und dem Klebeband beobachtet werden.

## Patentansprüche

1. Transparente, gehärtete Beschichtung von thermoplastischen Sensoroberflächen zur Verklebung mit Mineralglasoberflächen mittels eines doppelseitigen transparenten Klebebandes umfassend eines oder mehrere Polymere, ausgewählt aus der Gruppe bestehend aus mit Melaminharzen vemetzbaren Acrylharzen, mit Melaminharzen vemetzbaren Alkydharzen, mit isocyanaten vemetzbare Hydroxylgruppen-haltige Polyester, Polyether, Acrylate, strahlungsvemetzbaren Acrylatharzen, strahlungsvemetzbaren Methacrylatharzen, strahlungsvemetzbaren Urethanacrylaten und/oder strahlungsvemetzbaren Polyesteracrylaten, ausgenommen Polysiloxanlacke.

2. Beschichtung einer thermoplastischen Sensoroberfläche nach Anspruch 1, wobei die Sensoroberfläche aus einem Polycarbonat besteht.

3. Beschichtung nach Anspruch 1 oder 2 in einer Schichtdicke von 5 bis 50 µm, insbesondere in einer Schichtdicke von 10 bis 35 µm.

4. Verfahren zur Beschichtung von thermoplastischen Sensoroberflächen zur Verklebung mit Mineralglasoberflächen mittels eines doppelseitigen transparenten Klebebandes mit einer transparenten Beschichtung umfassend eines oder mehrere Polymere, ausgewählt aus der Gruppe bestehend aus mit Melaminharzen vernetzbaren Acrylharzen, mit Melaminharzen vernetzbaren Alkydharzen, mit Isocyanaten vernetzbare Hydroxylgruppen-haltige Polyester, Polyether, Acrylate, strahlungsvernetzbaren Acrylatharzen, strahlungsvemetzbaren Methacrylatharzen, strahlungsvernetzbaren Urethanacrylaten und/oder strahlungsvernetzbaren Polyesteracrylaten, wobei man die Lackbeschichtung auf die Sensoroberfläche aufträgt und härtet, wobei Polysiloxanlacke nicht verwendet werden.

5. Verfahren nach Anspruch 4, **dadurch gekennzeichnet, dass** man eine Sensoroberfläche aus Polycarbonat beschichtet.

6. Verfahren nach einem der Ansprüche 4 oder 5, **dadurch gekennzeichnet, dass** man die Beschichtung in einer Schichtdicke von 5 bis 50 µm, insbesondere in einer Schichtdicke von 10 bis 35 µm aufträgt und härtet.

7. Verfahren nach einem der Ansprüche 4 bis 6, **dadurch gekennzeichnet, dass** man die Härtung thermisch und/oder photochemisch durchführt.

8. Verfahren nach Anspruch 7, **dadurch gekennzeichnet, dass** man die thermische Härtung bei einer Temperatur im Bereich von 100 bis 150 °C, insbesondere im Bereich von 120 bis 130 °C im Verlauf von 10 bis 60 min, insbesondere im Verlauf von 20 bis 40 min durchführt.

9. Verfahren nach Anspruch 7, **dadurch gekennzeichnet, dass** man die photochemische Aushärtung bei UV-Bestrahlung, insbesondere bei einer Strahlungsintensität im Bereich von 100 mW/cm2 bis 2000 mW/cm² und einer Vorschubgeschwindigkeit von 0,1 bis 10 m/min durchführt.

10. Weiterbildung des Verfahrens nach einem der Ansprüche 4 bis 9, **dadurch gekennzeichnet, dass** man die beschichtete Sensoroberfläche nach der Härtung der Polymerbeschichtung mit einem doppelseitigen transparenten Klebeband, insbesondere auf der Basis von strahlungsvernetzten Acrylaten in Kontakt bringt.

11. Weiterbildung des Verfahren nach einem der Ansprüche 4 bis 10, **dadurch gekennzeichnet, dass** man eine thermoplastische Sensoroberfläche auf der Innenseite einer Mineralglasscheibe von Kraftfahrzeugen mittels eines doppelseitigen transparenten Klebebandes anbringt.

## Claims

1. Transparent, hardened coating of thermoplastic sensor surfaces for adhesion with glass surfaces by means of a double-sided transparent adhesive strip comprising one or more polymers, selected from the group comprising acrylic resins that can be cured with melamine resins, alkyd resins that are curable with melamine resins, polyesters, containing hydroxyl groups, that can be cured with isocyanates, polyethers, acrylates, acrylate resins, radiatively cross-linkable acrylate resins, radiatively cross-linkable methacrylate resins, radiatively cross-linkable urethane acrylates and/or radiatively cross-linkable polyacrylates, with the exception of polysiloxane lacquers.

2. Coating with a thermoplastic sensor surface in accordance with claim 1, whereby the sensor surface is made of a polycarbonate.

3. Coating in accordance with claim 1 or 2, of a thickness of 5 to 50 µm, particularly a thickness of 10 to 35 µm.

4. Process for coating thermoplastic sensor surfaces for adhesion with glass surfaces by means of a double-sided transparent adhesive strip comprising one or more polymers, selected from the group comprising acrylic resins that can be cured with melamine resins, alkyd resins that are curable with melamine resins, polyesters, containing hydroxyl groups, that can be cured with isocyanates, polyethers, acrylates, acrylate resins, radiatively cross-linkable acrylate resins, radiatively cross-linkable methacrylate resins, radiatively cross-linkable urethane acrylates and/or radiatively cross-linkable polyacrylates, whereby the lacquer coating is applied to and hardened on the sensor surface and polysiloxane lacquers are not used.

5. Process in accordance with claim 4, **characterized in that** a polycarbonate sensor surface is coated.

6. Process in accordance with claim 4 or 5, **characterized in that** the coating is applied to a thickness of 5 to 50 µm, particularly to a thickness of 10 to 35 µm, and is hardened.

7. Process in accordance with one of claims 4 to 6, **characterized in that** the hardening occurs thermally and/or photochemically.

8. Process in accordance with claim 7, **characterized in that** the thermal hardening is carried out at a temperature of between 100 and 150°C, particularly in the range of from 120 to 130°C, over a period of from 10 to 60 minutes, particularly over a period of 20 to 40 minutes.

9. Process in accordance with claim 7, **characterized in that** the photochemical solidification is carried out with UV-radiation, particularly at radiation intensity of from 100 mW/cm² to 2000 mW/cm² and a forward movement speed of from 0.1 to 10 m/min.

10. Further development of the process in accordance with one of claims 4 to 9, **characterized in that** the coated sensor surface is brought, after hardening of the polymer coating, into contact with a double-sided, transparent, adhesive strip, particularly one based on radiatively cross-linkable acrylates.

11. Further development of the process in accordance with one of claims 4 to 10, **characterized in that** a thermoplastic sensor surface is applied, by means of a double-sided, transparent, adhesive strip, to the inside of a glass sheet of vehicles.

## Revendications

1. Revêtement transparent durci de surfaces de capteurs thermoplastiques en vue de l'assemblage avec des surfaces de verre minéral à l'aide d'une bande adhésive transparente double face, comprenant un ou plusieurs polymères choisis dans le groupe constitué par des résines acryliques réticulables avec des résines mélamine, des résines alkydes réticulables avec des résines mélamine, des polyesters, polyéthers, polyacrylates hydroxylés réticulables avec des isocyanates, des résines acrylate réticulables par irradiation, des résines méthacrylate réticulables par irradiation, des résines uréthane-acrylate réticulables par irradiation et/ou des polyesteracrylates réticulables par irradiation, à l'exception de vernis polysiloxanes.

2. Revêtement d'une surface de capteur thermoplastique selon la revendication 1, la surface de capteur étant constituée d'un polycarbonate.

3. Revêtement selon la revendication 1 ou 2, en une épaisseur de couche de 5 à 50 µm, en particulier en une épaisseur de couche de 10 à 35 µm.

4. Procédé de revêtement de surfaces de capteurs thermoplastiques, en vue de l'assemblage avec des surfaces de verre minéral à l'aide d'une bande adhésive transparent double face, avec un revêtement transparent comprenant un ou plusieurs polymères choisis dans le groupe constitué par des résines acryliques réticulables avec des résines mélamine, des résines alkydes réticulables avec des résines mélamine, des polyesters, polyéthers, acrylates hydroxylés réticulables avec des isocyanates, des résines acrylate réticulables par irradiation, des résines méthacrylates réticulables par irradiation, des résines uréthane-acrylate réticulables par irradiation, et/ou des polyester-acrylates réticulables par irradiation, selon lequel on applique le revêtement de vernis sur la surface du capteur et on le durcit, les vernis polysiloxanes n'étant pas utilisés.

5. Procédé selon la revendication 4, **caractérisé en ce que** l'on revêt une surface de capteur en polycarbonate.

6. Procédé selon l'une des revendications 4 ou 5, **caractérisé en ce que** l'on applique et durcit le revêtement en une épaisseur de couche de 5 à 50 µm, en particulier en une épaisseur de couche de 10 à 35 µm.

7. Procédé selon l'une des revendications 4 à 6, **caractérisé en ce que** l'on effectue le durcissement par voie thermique et/ou photochimique.

8. Procédé selon la revendication 7, **caractérisé en ce que** l'on effectue le durcissement thermique à une température comprise entre 100 et 150°C, en particulier entre 120 et 130°C, en l'espace de 10 à 60 minutes, en particulier en l'espace de 20 à 40 minutes.

9. Procédé selon la revendication 7, **caractérisé en ce que** l'on effectue le durcissement photochimique par exposition aux UV, en particulier à une intensité de rayonnement comprise entre 100 mW/cm² et 2000 mW/cm², et à une vitesse d'avancement de 0,1 à 10 m/minute.

10. Perfectionnement du procédé selon l'une des revendications 4 à 9, **caractérisé en ce que**, après le durcissement du revêtement de polymère, on met la surface de capteur revêtue en contact avec une bande adhésive transparente double face, en particulier à base d'acrylates réticulés sous l'effet d'un rayonnement.

11. Perfectionnement du procédé selon l'une des revendications 4 à 9, **caractérisé en ce que** l'on applique une surface de capteur thermoplastique sur la face interne d'une vitre de verre minéral d'automobile à l'aide d'une bande adhésive transparente double face.
